# EUROPEAN PATENT APPLICATION

(11) **EP 1 249 778 A1**
(43) Date of publication of application: **16.10.2002**
(21) Application number: 01901379.6
(22) Date of filing: 17.01.2001
(51) Int. Cl.: G06F 17/60

(54) **SELLING PRICE MANAGEMENT SYSTEM AND SELLING PRICE MANAGEMENT METHOD**

(30) Priority: 17.01.2000 JP 2000008330; 12.01.2001 JP 2001004559
(71) Applicant: Sony Computer Entertainment Inc., Tokyo 107-0052 (JP)
(72) Inventor: KUTARAGI, Ken, Minato-ku, Tokyo 107-0052 (JP); SAITO, Akira, Minato-ku, Tokyo 107-0052 (JP); WAKIMOTO, Tanjo, Minato-ku, Tokyo 107-0052 (JP); KUWAHARA, Toru, Minato-ku, Tokyo 107-0052 (JP); TAMURA, Kazuya, Minato-ku, Tokyo 107-0052 (JP); HIRANO, Hajime, Minato-ku, Tokyo 107-0052 (JP)
(74) Representative: Görz, Ingo
(86) International application number: JP0100253
(87) International publication number: WO01054009

(57) **Abstract**

Selling prices of commodities in a virtual shop on the Internet are automatically managed in accordance with price variation factors such as the number of goods in stock to perform a proper price setting. When an order of a commodity is accepted, a Web server computer (16) renews an inventory DB (32), refers to a table (34) in which the number of pieces of the commodity and the price variation are associated with each other, calculates the selling price corresponding to the number of pieces of the commodity, and renews a selling price DB (31). The new selling price is reflected to the selling price information displayed in the virtual shop.

## Description

### TECHNICAL FIELD

The present invention relates to sales of goods in virtual shops on the Internet, and particularly to a technical art for setting the selling prices of commodities.

### BACKGROUND ART

Recently, various shops have actively taken commercial activities of opening their virtual shops on computers connected to the Internet to sell commodities. In a virtual shop, the shop displays commodities dealt by its real shop and the selling prices of the commodities on the Web page of the virtual shop. A user searches his/her desired commodity on the Web page, and if the price of the commodity is within his/her desired price, the user takes proceedings to purchase the commodity, whereby buying and selling of the commodity on the virtual shop is established.

The selling prices of commodities dealt by the shop can be generally set to any prices at the shop side. The selling prices of the commodities are determined on the basis of the costs of the commodities, the season of the sales, the selling strategy, etc. by the shop. Further, the selling prices are not necessarily set to fixed ones. For example, the shop may vary the selling prices in a short time in consideration of some factors such as a selling time zone, the number of pieces of each commodity in stock, etc. The number of goods in stock is one of the most important factors to vary the selling prices.

In general, as the number of pieces of some commodity in stock is increased, the selling price of the commodity is set to a lower one in order to sell the pieces of the commodity as early as possible. Conversely, if some commodity is popular and the number of the pieces of the commodity in stock is reduced, the selling price thereof is set to a high one. Further, from the viewpoint of the sale strategy, there may be supplied such a time service that some commodities are sold at prices lower than usual ones in some time zone.

Like real shops, the shops can vary the selling prices in accordance with the number of goods in stock in the virtual shops on the Internet.

However, if a large number of commodities are dealt in a virtual shop, the factors which induce the variation in the selling price such as the number of goods in stock, etc. and the management of selling prices are more intricate. Further, in order to reflect the variation of the selling prices to the Web page, the contents of the Web page must be rewritten. Therefore, it is difficult to set desired prices to a large number of commodities.

Further, 24-hours ordering can be normally carried out in the virtual shop, and thus the number of goods in stock may be varied at all times. Therefore, for price setting which is normally carried out about once every day or every several days at a shop after the shop is closed, it is difficult to set the selling prices on a real-time basis in connection with the number of pieces of respective commodities in stock.

### DISCLOSURE OF THE INVENTION

An object of the present invention is to provide a technical art for varying the selling prices of commodities in a virtual shop in accordance with predetermined conditions.

In order to attain the above object, according to a first aspect of the present invention, there is provided a selling price managing method of commodities which are ordered through a network, comprising:
a step of referring to a price variation rule which determines a variation rule for a selling price of a commodity and judging whether the selling price is needed to be changed at present;
and a step of setting a new selling price according to the price variation rule if the selling price is needed to be varied.

In order to attain the above object, according to a second aspect of the present invention, there is provided a selling price managing system of ordering commodities through a network, comprising:
first storage means for storing the selling prices of commodities;
second storage means for storing number of pieces of the commodities in stock;
a price variation rule which determines a variation rule of the selling price on the basis of the number of pieces of each commodity in stock;
and price varying means for referring to the number of pieces of each commodity in stock which is stored in the second storage means and the price variation rule to judge whether the variation of the selling price of the commodity is needed,
and varying the selling price of the commodity stored in the first storage means if the variation of the selling price of the commodity is needed.

### BRIEF DESCRIPTION OF THE DRAWINGS

Fig. 1 is a schematic diagram showing the relationship between a Web server computer of a shop and a user's computer;
Fig. 2 is a block diagram showing the functional construction of the Web server computer of the shop;
Fig. 3 is a diagram showing an example of a commodity information frame displayed on the Web page;
Fig. 4 is a schematic diagram showing an example of a data base structure of goods in stock;
Fig. 5 is a schematic diagram showing an example of a data base structure of selling prices;
Fig. 6 is a schematic diagram showing an example of a data base structure of standard prices;
Fig. 7 is a diagram showing an example of a purchasing frame displayed on the Web page;
Fig. 8 is a flowchart showing the management processing for managing the number of pieces in stock and the selling prices;
Fig. 9 is a flowchart showing an example of a price variation rule;
Fig. 10 is a flowchart showing another example of the price variation rule;
Fig. 11 is a diagram showing a table representing another example of the price variation rule; and
Fig. 12 is a flowchart showing another example of the price variation rule.

### DETAILED DESCRIPTION OF THE PREFERRED EMBODIMENTS

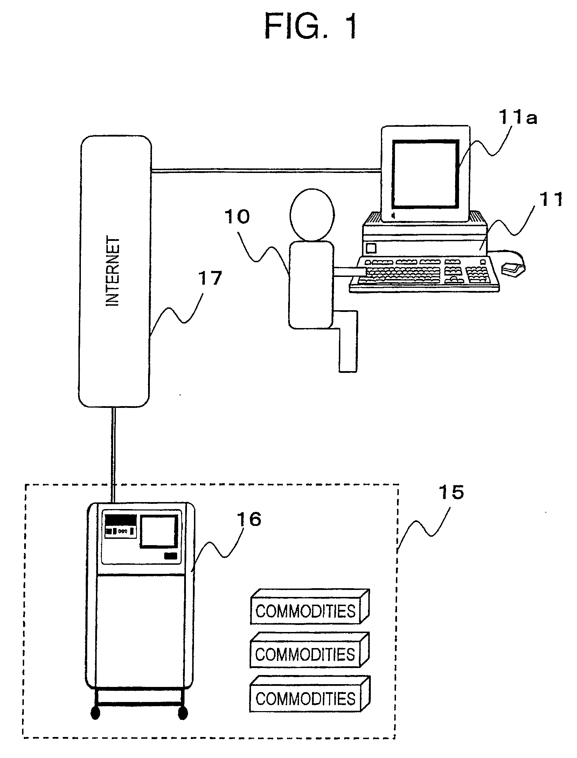

Preferred embodiments according to the present invention will be described hereunder with reference to the accompanying drawings. Fig. 1 is a schematic diagram showing the relationship between a Web server computer 16 of a shop 15 and a terminal computer 11 of a user 10 serving as a commodity purchaser. As shown in Fig. 1, the terminal computer 11 is connected to the Internet 17 through a telephone line or the like. The shop 15 supplies its virtual shop by using the Web server computer 16 connected to the Internet 17. The shop 15 is not required to manage the Web server computer 16 by itself, and it may utilize a Web server computer supplied by an internet provider. Commodities sold in the virtual shop by the shop 15 are not limited to material things, but they may be immaterial things such as services, etc.

The terminal computer 11 has a Web browse function. The browse function interprets a data file which is transmitted from the server computer 16 and described with an HTML language or the like, and displays the interpretation result on the display screen of an image output device 11a of the terminal computer 11.

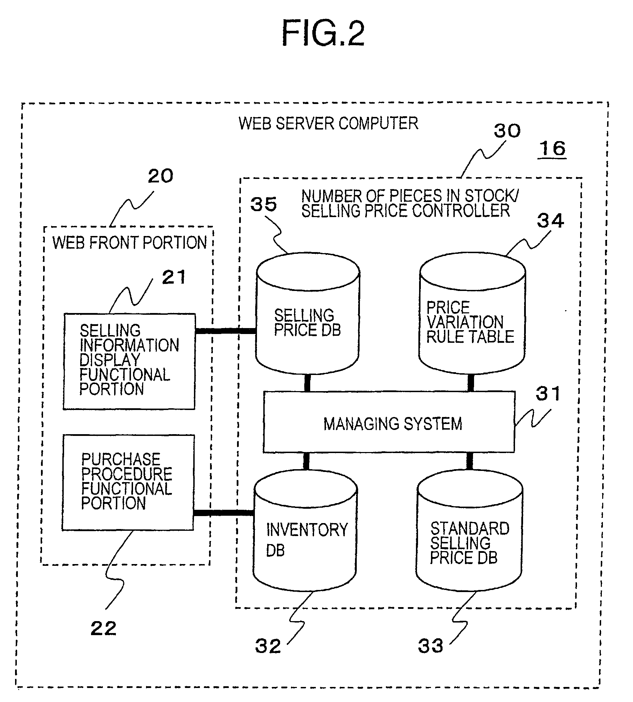

Fig. 2 is a block diagram showing the functional construction of the Web server computer 16 of the shop 15. The Web server computer 16 is equipped with a Web front portion 20 for controlling the display of Web pages and the data transmission/reception to/from the user 10, and an inventory (the number of pieces of goods in stock)/selling price controller 30 for managing the inventory status and the selling prices. These functions may be equipped while physically dispersed in plural server computers.

The Web front portion 20 is equipped with a sale information display functional portion 21 for displaying commodity names and the selling prices thereof, and a purchase procedure functional portion 22 for accepting the operation of the user 10 and displaying a page for sales procedures. Although not shown, the Web front portion 20 is equipped with general functions to implement the virtual shop, such as registration of users, search of goods, etc..

In response to a transmission request from the terminal computer 11, the sale information display functional portion 21 refers to a selling price DB 35 described later, and creates a file to display sale information containing the names of commodities and the selling prices thereof. The file thus created is transmitted to the terminal computer 11 by using a HTTP communication protocol, for example. The browse function of the terminal computer 11 which receives the file interprets the content of the file, as previously described, and displays the display frame information (Web page) corresponding to the file content on the image output device 11a connected to the terminal computer 11.

In response to a transmission request from the terminal computer 11, the purchase procedure functional portion 22 transmits a file for displaying information on the purchase procedures to the terminal computer 11. The user 10 may input information required for the purchase procedures onto the Web page corresponding to the file content, which is displayed on the image output device 11a, and transmit it to the purchase procedure functional portion 22.

The inventory/selling price controller 30 is equipped with a managing system 31 for setting the selling prices on the basis of the inventory status of commodities dealt (the number of pieces of each commodity in stock), etc., an inventory DB (data base) 32 for storing the number of pieces of each commodity in stock, a standard selling price DB 33 for storing standard selling prices which are settled on the basis of fixed prices for the respective dealt commodities, a price variation rule table 34 for storing a price variation rule for each dealt commodity, and a selling price DB 35 for storing the selling prices of the respective kinds of commodities. The above construction is an example, and the present invention is not limited to this construction.

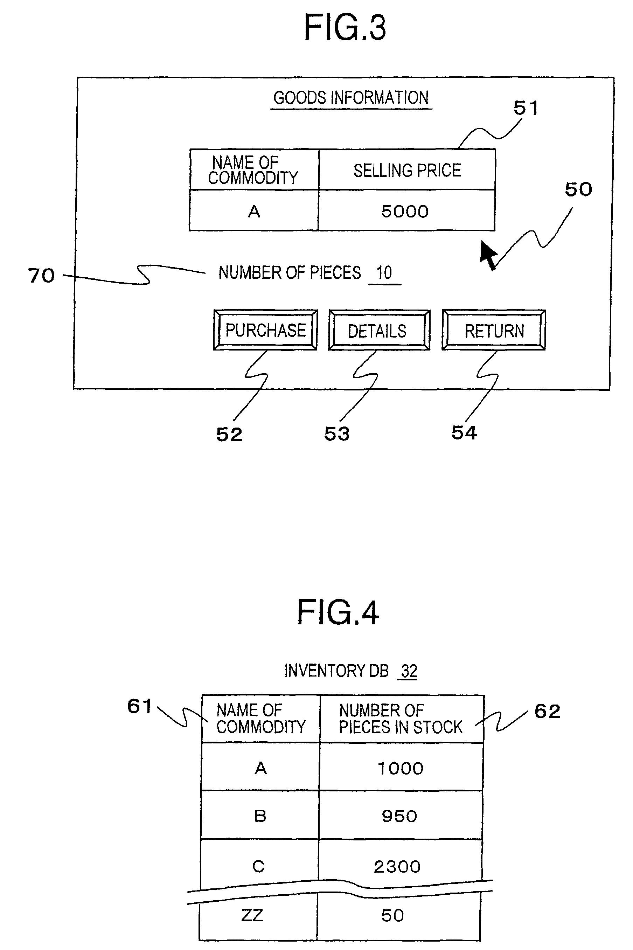

The inventory DB 32 stores names of commodities 61 and the number of pieces of each commodity in stock 62 in association with each other as shown in Fig. 4. In this embodiment, the inventory DB 32 memorizes that the number of pieces of a commodity A in stock is equal to 1000 and the number of pieces of a commodity B in stock is equal to 950.

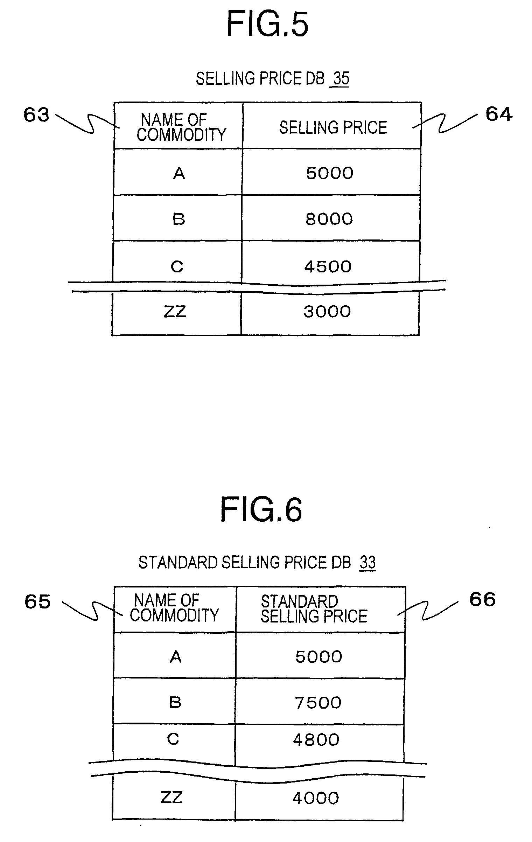

As shown in Fig. 6, the standard selling price DB 33 stores the name of each commodity 65 and the standard selling price 66 thereof in association with each other. The standard selling price is determined on the basis of a fixed price, a maker desired price, etc., and it serves as a reference for the selling price. In this embodiment, the standard prices are assumed to be fixed. In the case of Fig. 6, the standard selling price DB 33 memorizes that the standard selling price of the commodity A is equal to 5,000 yen, the standard selling price of the commodity B is equal to 7,500 yen, etc.

As shown in Fig. 5, the selling price DB 35 stores the name of each commodity 63 and the selling price 64 thereof in association with each other. The selling price is a price at which a piece of each commodity is actually sold to a user. In this embodiment, the selling price is varied in accordance with variation in number of pieces (of each commodity) in stock, etc. In this case, the selling price DB 35 memorizes that the selling price of the commodity A is equal to 5,000 yen and the selling price of the commodity B is equal to 8,000 yen, etc.

A normal computer having a central processing unit, a storage device, etc. may be used for the terminal computer 11 and the Web server computer.

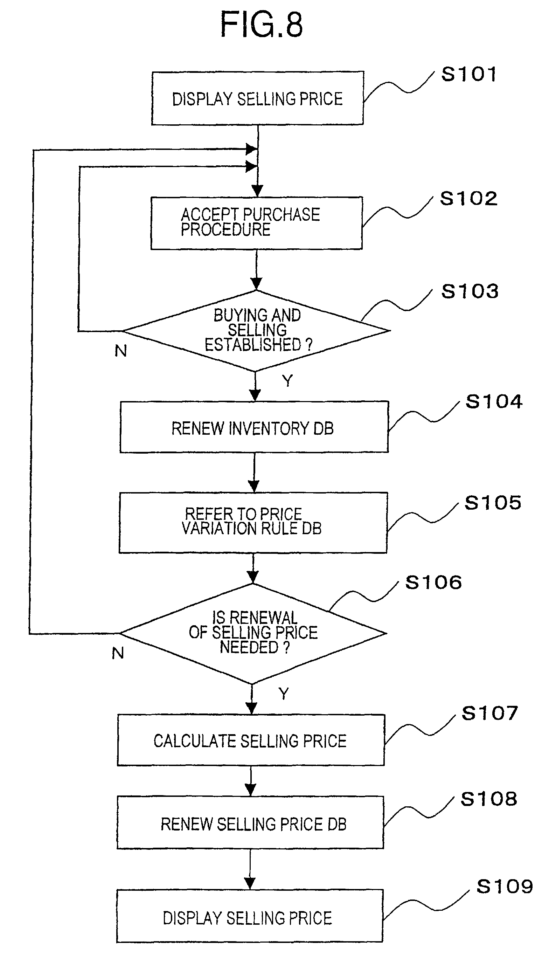

Next, the processing of this embodiment when the Web server computer 16 accepts purchase procedures from the terminal computer 11 and manages the number of pieces of each commodity in stock and the selling prices of these commodities will be described with reference to the flowchart of Fig. 8. In the virtual shop of this embodiment, the procedures such as the registration of members, the search of goods, the settlement of accounts, etc. are the same as the conventional virtual shop, and thus the detailed description thereof is omitted. Further, the present invention is not limited to the processing and the construction of Web pages described below.

Fig. 3 shows a display frame on goods information which is displayed on the image output device 11a of the terminal computer 11 by the sale information display functional portion 21 of the Web front portion 20. This frame is displayed, for example, when an inquiry about the selling prices of commodities from the terminal computer 11 is accepted. This display frame has a column 51 indicating the name of a commodity and the selling price of the commodity (S101). When accepting a display request of this display frame, the sale information display functional portion 21 refers to the selling price DB 35 and extracts the selling price 64 on the basis of the commodity name 63 as a key, thereby setting the selling price to be displayed in the column 51. Therefore, as the selling price in the column 51 is displayed a selling price which is recorded in the selling price DB 35 at that time.

This display frame further has a "purchase" button 52, a "detail" button 53, a "return" button 54 and a number input column 70. The "purchase" button 52 is used to accept a user's wish of purchasing a commodity displayed in the column 51, the "detail" button 53 is used to display detailed information on the commodity A, and the "return" button 54 is used to finish this display frame. The number input column 70 is used to accept an input of the number of pieces of a commodity which the user wishes to purchase. The display frame is designed so that the selling price for only one commodity is displayed on the display frame, however, it may be designed so that the selling prices of plural kinds of commodities are displayed at the same time.

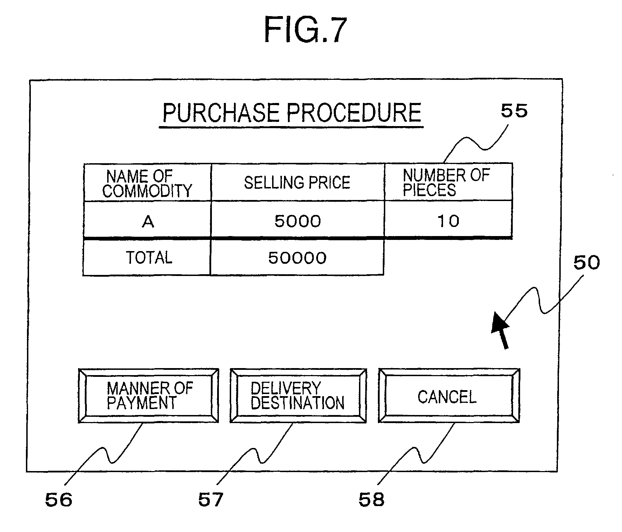

When accepting a click of the purchase button 52, the purchase proceeding function 22 displays a commodity purchasing frame whose example is shown in Fig. 7 on the image output device 11a of the terminal computer 11. The display frame has a column 55 for displaying the name of the commodity for which the user's purchase wish is accepted, the selling price of the commodity, the number of the pieces of the commodity to be purchased and the total amount, a "manner of payment " button 56 for designating the manner of payment, a "delivery destination" button 57 for designating the delivery destination of the commodity and a "cancel" button 58 for canceling the purchase procedure.

The designations of the manner of payment and the delivery destination are accepted on display frames (not shown) which are displayed by accepting clicks on the "manner of payment" button 56 and the "delivery destination" button 57 respectively, and then the purchase procedures from the terminal computer 11 are completed.

Here, it is assumed that the user 10 takes the purchase procedures of purchasing ten pieces of the commodity A (S102) and the buying and selling is established (S103). The purchase procedure functional portion 22 notifies to the inventory DB 32 that ten pieces of the commodity A are ordered. If the number of pieces of the commodity A in stock is equal to 1,000 at present, ten pieces of these pieces are allocated to the buying and selling. Accordingly, the inventory DB 32 renews the number of pieces in stock 62 for the commodity A to 990 at the time when it receives the notification that ten pieces of the commodity A are ordered (S104). In this case, the purchase procedure functional portion 22 may access the inventory DB 32 to renew the number of pieces of the commodity A in stock 62.

The managing system 31 monitors the inventory DB 32, and refers to the price variation rule of the commodity A stored in the price variation rule table 34 when it detects that the number of pieces of the commodity A is renewed (S105). Alternatively, the inventor DB 32 may notify the renewal of the number of pieces of the commodity A to the managing system 31.

Here, the price variation rule stored in the price variation rule table 34 is prepared by determining the variation rule of the selling price to the number of pieces in stock for every commodity. By using such a price variation rule, the price variation rule can be set so as to be different among commodities. That is, in this embodiment, any commodity and the price variation rule applied to the commodity are associated with each other. This association can be implemented by creating the corresponding table and enabling the managing system 31 to refer to the corresponding table, however, the present invention is not limited to this manner. The above embodiment may be modified so that a common price variation rule is applied to plural commodities.

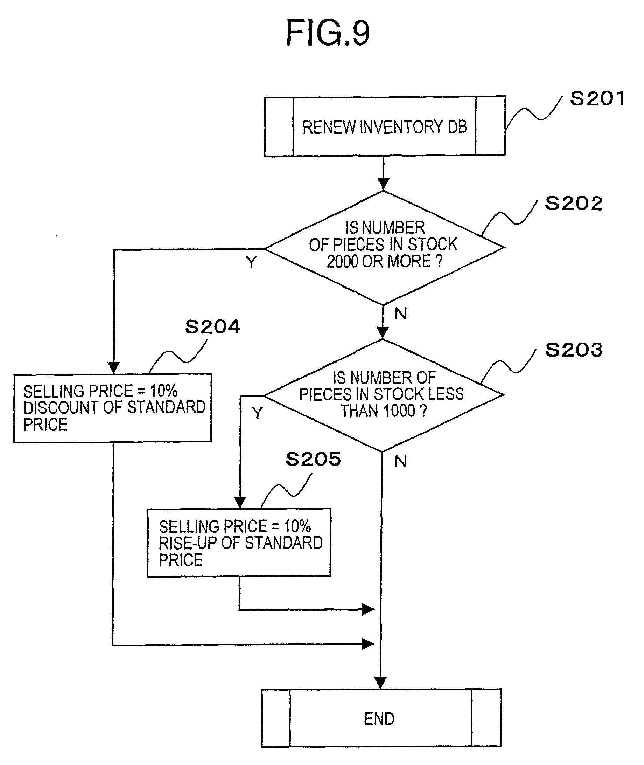

In this embodiment, the price variation rule of the commodity A is assumed to be settled as shown in the flowchart of Fig. 9. That is, the price variation rule is assumed to be settled so that the selling price is reduced less than the standard price by 10% (S204) when the number of pieces of the commodity A in stock is equal to 2,000 or more, and the selling price is increased more than the standard price by 10% (S205) when the number of pieces of the commodity A in stock is less than 1,000. In response to the renewal of the number of pieces of the commodity A in stock to 990 (S106), the managing system 31 sets the selling price to 5,500 yen which is increased more than the standard price of the commodity A by 10% (S107), and renews the selling price 64 of the commodity A recorded in the selling price DB 35 (S108).

Therefore, when the sale information display functional portion 21 afterwards displays the frame on the commodity information shown in Fig. 3, the selling price 64 of the commodity A thus renewed is referred to. That is, it is displayed on the Web page concerning the commodity information that the selling price of the commodity A is equal to 5,500 yen (S109).

If the management system 31 refers to the price variation rule of the commodity A and then judges that it is unnecessary to vary the selling price, the selling price DB 35 is not renewed.

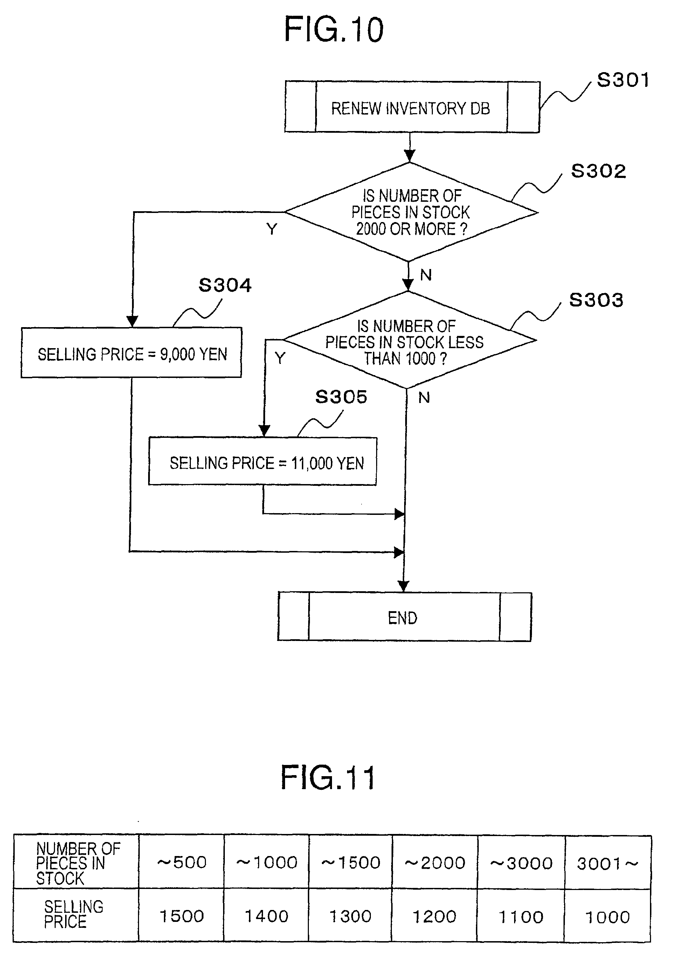

The price variation rule is not limited to one which defines the relationship between the number of pieces in stock and the variation rate to the standard price, but also various setting may be made. For example, the relationship between the number of pieces in stock and the absolute amount of money may be set as shown in Fig. 10, and the absolute amount of money (or variation rate) may be stepwise varied in accordance with the number of pieces in stock as shown in Fig. 11. Further, there may be set such a rule that the number of pieces in stock (threshold value) which needs the price variation is set in advance and if the number of pieces in stock is equal to the threshold value, the rule of varying the price is referred to. In this case, a rule for setting a change condition used for a judgment as to whether the price variation is needed or not and a rule for setting a variation condition used to set a new selling price are settled in advance.

The price variation rule shown in Fig. 10 sets such a rule that the selling price is set to 9,000 yen when the number of pieces in stock is equal to 2,000 or more (S304), and the selling price is set to 11,000 yen when the number of pieces in stock is less than 1,000, (S305).

The price variation rule shown in Fig. 11 sets such a rule that the selling price is set to 1,500 yen when the number of pieces in stock is less than 500, the selling price is set to 1,400 yen when the number of pieces in stock is not less than 501 and not more than 1,000, and likewise the selling price is set to 1,000 yen when the number of pieces in stock is equal to 3,001 or more.

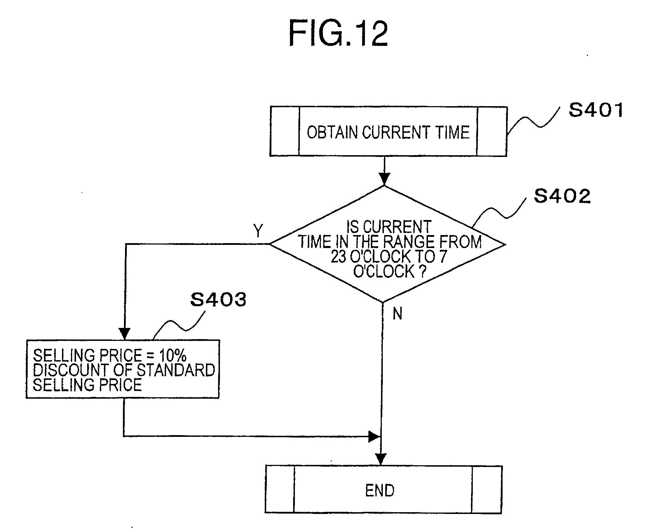

Further, the price variation rule may be based on the season, the selling date and time, etc. which are price variation factors other than the number of pieces in stock. For example, as shown in the flowchart of Fig. 12, a midnight to early morning discount can be automatically set by adding such a rule that if the present time is obtained (S401) and it is in the range from 23 o'clock to 7 o'clock (S402), the standard selling price is discounted by 10% (S403). In this case, in place of the inventory DB 32 shown in Fig. 2, a function of referring to the present time is equipped.

In the above embodiment, if the managing system 31 recognizes that the number of pieces in stock is renewed, it immediately refers to the price variation rule table 34 to judge whether the variation of the selling price is necessary. However, the timing at which the managing system 31 makes a judgment as to the variation of the selling price is not limited to the renewal time of the number of pieces, but the variation judgment may be carried out periodically, for example, every hour or four times per day. This processing can be implemented by providing a function of starting the processing of periodically making a judgment as to the variation of the selling price, for example, by providing a timer or the like in the management system 31. If the number of orders reaches a predetermined number, the judgment work may be carried out. This processing can be implemented by providing a counter or the like in the system 31.

In this embodiment, the present invention is applied to the sale of goods by using the Web page on the Internet. However, the present invention is not limited to the Internet, but it may be applied to a computer network, for example, the sale of goods using a personal computer communication, etc.

As described above, according to the present invention, the selling prices may be varied interlockingly with the variation of the variation factor preset to the selling price.

## Claims

1. A selling price managing method for commodities which are ordered through a network, comprising:
a step of referring to a price variation rule which determines a variation rule for the selling price of a commodity and judging whether the selling price is needed to be changed at present; and
a step of setting a new selling price according to the price variation rule if the selling price is needed to be varied.

2. A selling price managing system for commodities which are ordered through a network, comprising:
first storage means for storing the selling prices of the commodities;
second storage means for storing the number of pieces of the commodities in stock;
a price variation rule which determines a variation rule of the selling price on the basis of the number of pieces of each commodity in stock; and
price varying means for referring to the number of pieces of each commodity in stock which is stored in said second storage means and the price variation rule to judge whether the variation of the selling price of the commodity is needed, and varying the selling price of the commodity stored in said first storage means if the variation of the selling price of the commodity is needed.

3. The selling price managing system as claimed in claim 2, wherein said price varying means judges whether the variation of the selling price of each commodity is needed when the number of pieces of the commodity stored in said second storage means is varied.

4. The selling price managing system as claimed in claim 2, further comprising third storage means for storing the standard prices of the commodities, wherein said price variation rule determines a variation rate or variation value with respect to the standard price of the selling price.

5. The selling price managing system as claimed in claim 2, wherein said price variation rule determines the selling price with respect to the number of pieces of a commodity stored in said second storage means.

6. The selling price managing system as claimed in claim 2, wherein when an order of the commodity is accepted, the selling price of the commodity stored in said first storage means is presented as the selling price of the commodity.

7. The selling price managing system as claimed in claim 2, wherein said first storage means stores the identifiers of a plural kinds of commodities associated with the selling prices thereof,
said second storage means stores the identifiers of the plural commodities associated with the number of pieces of the respective commodities in stock,
said price variation rule stores the identifies of the plural commodities associated with variation rules applied there to,
and said price variation means judges whether variation of the selling price is needed per every commodity.

8. The selling price managing system as claimed in claim 2, further comprising means for obtaining the current time,
wherein said price variation means judges whether of the variation of the selling price of each commodity is necessary when the current time gets equal to a predetermined time or at a predetermined time interval.

9. The selling price managing system as claimed in claim 2, further comprising means for renewing the number of pieces of the commodity stored in said second storage means when an order of the commodity is accepted through the network.
